# EUROPEAN PATENT SPECIFICATION

(11) **EP 2 748 014 B1**
(45) Date of publication and mention of the grant of the patent: **20.07.2016**
(21) Application number: 11872327.9
(22) Date of filing: 14.09.2011
(51) Int. Cl.: B60C 1/00

(54) **TIRE TREAD**
REIFENLAUFFLÄCHE
BANDE DE ROULEMENT DE PNEUMATIQUE

(43) Date of publication of application: 02.07.2014
(73) Proprietor: MICHELIN Recherche et Technique S.A., 1763 Granges-Paccot (CH); Compagnie Générale des Etablissements Michelin, 63000 Clermont-Ferrand (FR)
(72) Inventor: STUBBLEFIELD, Raymond, Greenville, SC 29605 (US); SAINTIGNY, Xavier, Greenville, SC 29607 (US)
(74) Representative: Casalonga
(86) International application number: PCT/US2011/051644
(87) International publication number: WO 2013/039498

(56) References cited:
- US-A- 6 013 718
- US-A1- 2005 137 316
- US-A1- 2010 204 358
- US-B1- 7 259 205

## Description

### BACKGROUND OF THE INVENTION

### Field of the Invention

This invention relates generally, to vehicle tires and more particularly, to tire treads and materials from which they are made.

### Description of the Related Art

It is known in the industry that tire designers must often compromise on certain characteristics of the tires they are designing. Changing a tire design to improve one characteristic of the tire will often result in a compromise; *i,e.,* an offsetting decline in another tire characteristic. One such comprise exists between tire wear and wet braking. Tire wear may be improved by increasing the amount of polybutadiene blended into the tread's rubber composition. However, increasing the polybutadiene content in the tread's rubber composition typically results in a loss of the wet braking performance that is known to be improved, for example, by decreasing the polybutadiene content of the tire tread.

Tire designers and those conducting research in the tire industry search for materials and tire structures that can break some of the known compromises. It would be desirable to provide new tire designs that break the compromise between wear and wet braking.

### SUMMARY OF THE INVENTION

Particular embodiments of the present invention include treads and tires having such treads that have improved characteristics breaking the compromise between wear and wet braking. Such embodiments include a tread for a tire comprising a rubber composition based upon a cross-linkable composition having greater than 90 phr of an elastomer component selected from styrene-butadiene rubber (SBR), polybutadiene rubber or combinations thereof having a glass transition temperature of between -100°C and less than -50° C and a plasticizing system. Embodiments include having a plasticizing system comprising between 5 phr and 120 phr of a plasticizing resin having a Tg of at least 25° C and between 0 phr and 60 phr of a plasticizing oil.

There may be embodiments that include between 0 phr and 9 phr of an additional highly unsaturated diene elastomer blended into the cross-linkable rubber composition as well as a reinforcing filler. The cross-linkable rubber composition may further include a curing system.

Particular embodiments may include the elastomer component having a Tg of between -90 °C and -60 °C and/or may further have the elastomer component included in an amount of at least 95 phr.

The foregoing and other objects, features and advantages of the invention will be apparent from the following more detailed descriptions of particular embodiments of the invention.

### BRIEF DESCRIPTION OF THE DRAWINGS

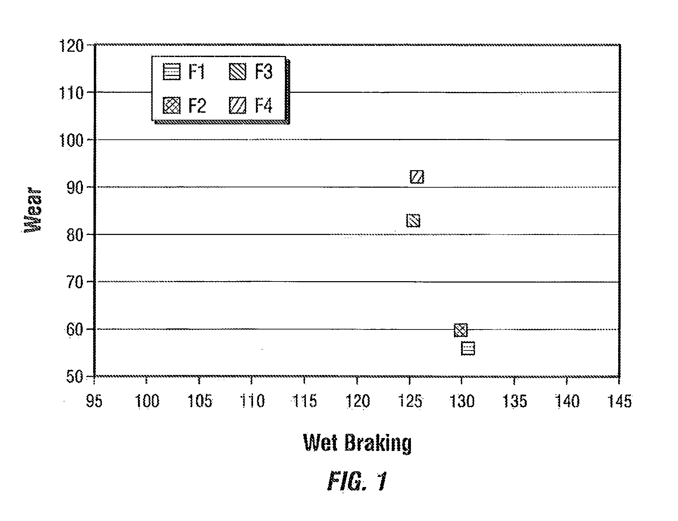

FIG. 1 is a graph that compares the wet braking and wear performance for tires having treads manufactured from different rubber compositions.

### DETAILED DESCRIPTION OF PARTICULAR EMBODIMENTS

Particular embodiments of the present invention include tires and treads for vehicles that surprisingly break a compromise faced by tire designers; *i.e*., an increase in the tread wear of a tire often results in a decrease in the wet braking performance of the tire. This compromise may be broken by forming unique tire treads from a rubber composition that includes a rubber component having a low glass transition temperature (Tg) of between -100 °C and less than -50 °C and a plasticizing system that may include both a high loading of a plasticizing resin having a high Tg and a plasticizing liquid.

The tires and treads disclosed herein are formed of a rubber composition that includes a rubber component that is made up entirely or almost entirely of a rubber having a low glass transition temperature (Tg), *i.e*., between -100 °C and less than -50° C. Such useful rubber components may include, for example, SBR, polybutadiene or combinations thereof. While particular embodiments of the present invention may utilize only the low Tg rubber as the rubber component of a rubber composition, other embodiments may include up to 9 parts by weight per hundred parts of rubber (phr) of one or more other diene rubbers blended into the rubber composition. As will be shown below, it is this exclusive or nearly exclusive use of the low Tg rubber as the elastomer component in the rubber composition mixed with a high Tg resin that surprisingly provides the tread's high performance level for both wet braking and wear.

As used herein, "phr" is "parts per hundred parts of rubber by weight" and is a common measurement in the art wherein components of a rubber composition are measured relative to the total weight of rubber in the composition, *i*.*e*., parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

As is known generally, a tire tread is the road-contacting portion of a vehicle tire that extends circumferentially about the tire. It is designed to provide the handling characteristics required by the vehicle; *e*.*g*., traction, dry braking, wet braking, cornering and so forth - all being preferably provided with a minimum amount of noise being generated and at a low rolling resistance.

Treads of the type that are disclosed herein include tread elements that are the structural features of the tread that contact the ground. Such structural features may be of any type or shape, examples of which include tread blocks and tread ribs. Tread blocks have a perimeter defined by one or more grooves that create an isolated structure in the tread while a rib runs substantially in the longitudinal (circumferential) direction and is not interrupted by any grooves that run in the substantially lateral direction or any other grooves that are oblique thereto.

The radially outermost faces of these tread elements make up the contact surface of the tire tread - the actual surface area of the tire tread that is adapted for making contact with the road as the tire rotates. The total contact surface of the tire tread is therefore the total surface area of all the radially outermost faces of the tread elements that are adapted for making contact with the road.

As noted above, particular embodiments of the present invention include treads and tires having such treads manufactured from a rubber composition that includes greater than 90 phr of a low Tg rubber and between 0 phr and 9 phr of an additional highly unsaturated diene elastomer. Alternatively the additional highly unsaturated diene elastomer may be included at between 0 phr and 9 phr, between 0 phr and 5 phr or, in the case of the rubber composition having only the low Tg rubber, 0 phr of the additional highly unsaturated diene elastomer or any other type of diene elastomer.

SBR is a copolymer of styrene and butadiene and is one of the most commonly used rubbers. It is typically manufactured by one of two processes - an emulsion process producing E-SBR and a solution process producing S-SBR. Particular embodiments of the present invention contemplate utilizing S-SBR, E-SBR or combinations thereof as the low Tg, SBR component of the rubber composition.

The microstructure of SBR is typically described in terms of the amount of bound styrene and the form of the butadiene portion of the polymer. A typical SBR that is often suitable for use in tires is around 25 wt, % bound styrene. Materials having a very high content of bound styrene, *e,g.,* around 80 wt. %, are identified as high styrene resins and are not suitable as an elastomer for manufacturing treads. Particular embodiments of the present invention may utilize an SBR having a bound styrene content of between 3 wt. % and 35 wt. % or alternatively between 3 wt. % and 30 wt. %, between 3 wt. % and 25 wt. %, between 3 wt. % and 15 wt. %, between 5 wt. % and 20 wt. % or between 5 wt. % and 15 wt. % bound styrene.

Because of the double bond present in the butadiene portion of the SBR, the butadiene portion is made up of three forms: *cis*-1,4, *trans*-1,4 and vinyl-1,2. SBR materials suitable for use as the low Tg SBR may be described as having a vinyl-1,2-bond content of between 4 mol, % and 30 mol. % or alternatively, between 4 mol. % and 25 mol. % or between 4mol. % and 20 mol. %.

As known to those having ordinary skill in the art, the professing conditions under which the polymerization takes place determines the microstructure of the SBR product. Typically, as the styrene content and the vinyl content of the SBR increases, the Tg of the material increases. To provide a tire tread having the improved performance in the compromise between wear and wet braking, the SBR that is exclusively or almost exclusively used in the treads disclosed herein has a glass transition temperature of less than -50 °C or alternatively, less than -60 °C. In particular embodiments, the SBR may have a glass transition temperature of between -100 °C and -50 °C or alternatively, between -100 °C and -55 °C, between -100 °C and -60 °C or between -90 °C and -50 °C. The glass transition temperature may also range between greater than -80 °C and -55 °C, between -75 °C and -60 °C or between -75 °C and -65 °C. Glass transition temperatures for the low Tg SBR are determined by differential scanning calorimetry (DSC) according to ASTM E1356.

Examples of SBR having a low Tg include, for example, DURADENE 711 (18 % styrene, 12 % vinyl, -70 °C Tg) and DURADENE 741 (5 % styrene, 28 % vinyl, -77 °C Tg, tin coupled polymer) that are available from Firestone of Akron, OH and TUFDENE 1000 (18 % styrene, 11 % vinyl, -72 °C Tg) available from Asahi Chemical Company of Japan.

Polybutadienes that have glass transition temperatures in the same ranges as the low Tg SBR materials described above may also be utilized similarly to the low Tg SBR. The glass transition temperatures of polybutadiene may be adjusted by varying the vinyl content of the polymer using methods that are well known in the art. Particular embodiments of the rubber compositions disclosed herein may include greater than 90 phr or alternatively, greater than 95 phr or 100 phr of a low Tg SBR, a low Tg polybutadiene, *i.e.,* a polybutadiene having the same glass transition temperature ranges as defined above for a low Tg SBR, or combinations thereof.

In addition to the low Tg SBR and/or polybutadiene elastomers discussed above, particular embodiments of the present invention may further include an additional diene elastomer. The diene elastomers or rubbers that are useful for such rubber compositions are understood to be those elastomers resulting at least in part, *i.e.,* a homopolymer or a copolymer, from diene monomers, *i.e*., monomers having two double carbon-carbon bonds, whether conjugated or not.

These diene elastomers may be classified as either "essentially unsaturated" diene elastomers or "essentially saturated" diene elastomers. As used herein, essentially unsaturated diene elastomers are diene elastomers resulting at least in part from conjugated diene monomers, the essentially unsaturated diene elastomers having a content of such members of units of diene origin (conjugated dienes) that is at least 15 mol. %. Within the category of essentially unsaturated diene elastomers are highly unsaturated diene elastomers, which are diene elastomers having a content of units of diene origin (conjugated diene) that is greater than 50 mol. %.

Those diene elastomers that do not fall into the definition of being essentially unsaturated are, therefore, the essentially saturated diene elastomers. Such elastomers include, for example, butyl rubbers and copolymers of dienes and of alpha-olefins of the EPDM type. These diene elastomers have low or very low content of units of diene origin (conjugated dienes), such content being less than 15 mol. %.

The elastomers may have any microstructure, which is a function of the polymerization conditions used, in particular of the presence or absence of a modifying and/or randomizing agent and the quantities of modifying and/or randomizing agent used. The elastomers may, for example, be block, random, sequential or micro-sequential elastomers, and may be prepared in dispersion or in solution; they may be coupled and/or starred or alternatively functionalized with a coupling and/or staring or functionalizing agent. Of course these comments also apply to the low Tg SBR and polybutadienes discussed above that are useful in the present invention.

Functionalized rubbers, *i.e.,* those appended with active moieties, are well known in the industry. The backbone or the branch ends of the elastomers may be functionalized by attaching these active moieties to the ends of the chains or to the backbone of the polymer Examples of functionalized elastomers include silanol or polysiloxane end-functionalized elastomers, examples of which may be found in US Patent No. 6,013,718, issued January 11, 2000, which is hereby fully incorporated by reference. Other examples of functionalized elastomers include those having alkoxysilane groups as described in US 5,977,238, carboxylic groups as described in US 6,815,473 or polyether groups as described in US 6,503,973, all these cited patents being incorporated herein by reference. As noted, such functionalized elastomers are also useful as the low Tg SBR and polybutadiene rubbers as well.

Examples of suitable diene elastomers include polybutadienes, particularly those having a content of 1,2- units of between 4 mol. % and 80 mol. % or those having a cis-1,4 content of more than 80 mol. %. Also included are polyisoprenes and butadiene/isoprene copolymers, particularly those having an isoprene content of between 5 wt. % and 90 wt. % and a glass transition temperature (Tg, measured in accordance with ASTM D3418) of -40° C to -80° C.

In summary, suitable diene elastomers for particular embodiments of the present invention include highly unsaturated diene elastomers such as polybutadienes (BR), polyisoprenes (IR), natural rubber (NR), butadiene copolymers, isoprene copolymers and mixtures of these elastomers. Such copolymers include butadiene/styrene copolymers (SBR), isoprene/butadiene copolymers (BIR), isoprene/styrene copolymers (SIR) and isoprene/butadiene/styrene copolymers (SBIR). Suitable elastomers may also include any of these elastomers being functionalized elastomers.

The additional diene elastomer included in particular embodiments of the present invention may be one diene elastomer or a mixture of several diene elastomers. The additional diene elastomer may further be selected from the highly unsaturated diene elastomers, the essentially unsaturated diene elastomers, the essentially saturated diene elastomers or combinations thereof.

In addition to the rubber, the rubber composition disclosed herein may further include reinforcing filter. Reinforcing fillers are added to rubber compositions to, *inter alia,* improve their tensile strength and wear resistance. Any suitable reinforcing filler may be suitable for use in compositions disclosed herein including, for example, carbon blacks and/or inorganic reinforcing fillers such as silica, with which a coupling agent is typically associated.

Suitable carbon blacks include, for example, those of the type HAF, ISAF and SAF, conventionally used in tires. Reinforcing blacks of ASTM grade series 100, 200 and/or 300 are suitable such as, for example, the blacks N115, N134, N234, N330, N339, N347, N375 or alternatively, depending on the intended application, blacks of higher ASTM grade series such as N660, N683 and N772.

Inorganic reinforcing fillers include any inorganic or mineral fillers, whatever its color or origin (natural or synthetic), that are capable without any other means, other than an intermediate coupling agent, or reinforcing a rubber composition intended for the manufacture of tires. Such inorganic reinforcing fillers can replace conventional tire-grade carbon blacks, in whole or in part, in a rubber composition intended for the manufacture of tires. Typically such fillers may be characterized as having the presence of hydroxyl (-OH) groups on its surface.

Inorganic reinforcing fillers may take many useful forms including, for example, as powder, microbeads, granules, balls and/or any other suitable form as well as mixtures thereof. Examples of suitable inorganic reinforcing fillers include mineral fillers of the siliceous type, such as silica (SiO₂), of the aluminous type, such as alumina (AlO₃) or combinations thereof.

Useful silica reinforcing fillers known in the art include fumed, precipitated and/or highly dispersible silica (known as "HD" silica). Example of highly dispersible silicas include Ultrasil 7000 and Ultrasil 7005 from Degussa, the silicas Zeosil 1165MP, 1135MP and 1115MP from Rhodia, the silica Hi-Sil EZ150G from PPG and the silicas Zeopol 8715, 8745 and 8755 from Huber. In particular embodiments, the silica may have a BET surface area, for example, of between 60 m²/g and 250 m²/g or alternatively between 80 m²/g and 230 m²/g,

Examples of useful reinforcing aluminas are the aluminas Baikalox A125 or CR125 from Baikowski, APA-100RDX from Condea, Aluminoxid C from Degussa or AKP-G015 from Sumitomo Chemicals.

For coupling the inorganic reinforcing filler to the diene elastomer, a coupling agent that is at least bifunctional provides a sufficient Chemical and/or physical connection between the inorganic reinforcement filler and the diene elastomer. Examples of such coupling agents include bifunctional organosilanes or polyorganosiloxanes. Such coupling agents and their use are well known in the art. The coupling agent may optionally be grafted beforehand onto the diene elastomer or onto the inorganic reinforcing filler as is known. Otherwise it may be mixed into the rubber composition in its free or non-grafted state. One useful coupling agent is X 50-S, a 50-50 blend by weight of Si69 (the active ingredient) and N330 carbon black, available from Evonik Degussa.

In the rubber compositions according to the invention, the coupling agent may be included at any suitable amount for the given application, examples of which are between 2 phr and 15 phr or alternatively, between 2 phr and 12 phr. It is generally desirable to minimize its use. In particular embodiments, the amount of coupling agent may represent between 0.5 and 15 wt. % relative to the total weight of the silica filler. In the case for example of tire treads for passenger vehicles, the coupling agent may be less than 12 wt. % or even less than 8 wt. % relative to the total weight of the silica filler.

In particular embodiments, the amount of total reinforcing filler (carbon black and/or reinforcing inorganic filler) may include any suitable amount for the given application, examples of which are between 20 phr and 200 phr or alternatively between 30 phr and 150 phr, between 90 phr and 130 phr or between 50 phr and 175 phr.

In addition to the diene elastomer and reinforcing filler, particular embodiments of the rubber composition disclosed herein may further include a plasticizing system. The plasticizing system may provide both an improvement to the processability of the rubber mix and/or a means for adjusting the rubber composition's glass transition temperature and/or its rigidity. Suitable plasticizing systems may include a plasticizing liquid, a plasticizing resin or combinations thereof.

Suitable plasticizing liquids may include any liquid known for its plasticizing properties with diene elastomers. At room temperature (23 °C), these liquid plasticizers or these oils of varying viscosity are liquid as opposed to the resins that are solid. Examples include those derived from petroleum stocks, those having a vegetable base and combinations thereof. Examples of oils that are petroleum based include aromatic oils, paraffinic oils, naphthenic oils, MES oils, TDAE oils and so forth as known in the industry. Also known are liquid diene polymers, the polyolefin oils, ether plasticizers, ester plasticizers, phosphate plasticizers, sulfonate plasticizers and combinations of liquid plasticizers,

Examples of suitable vegetable oils include sunflower oil, soybean oil, safflower oil, corn oil, linseed oil and cotton seed oil. These oils and other such vegetable oils may be used singularly or in combination. In some embodiments, sunflower oil having a high oleic acid content (at least 70 weight percent or alternatively, at least 80 weight percent) is useful, an example being AGRI-PURE 80, available from Cargill with offices in Minncapolis, MN. In particular embodiments of the present invention, the selection of a suitable plasticizing oil is limited to a vegetable oil having a high oleic acid content.

The amount of plasticizing liquid useful in any particular embodiment of the present invention depends upon the particular circumstances and the desired result. In general, for example, the plasticizing liquid may be present in the rubber composition in an amount of between 0 or 10 phr and 60 phr or alternatively, between 0 or 10 phr and 55 phr, between 0 or 10 phr and 50 phr, between 0 or 5 phr and 40 phr or between 0 or 10 phr and 35 phr. In particular embodiments, there may he no plasticizing liquid utilized.

A plasticizing hydrocarbon resin is a hydrocarbon compound that is solid at ambient temperature (*e*.*g*., 23 °C) as opposed to a liquid plasticizing compound, such as a plasticizing oil. Additionally a plasticizing hydrocarbon resin is compatible, *i*.*e*., miscible, with the rubber composition with which the resin is mixed at a concentration that allows the resin to act as a true plasticizing agent, *e*.*g*., at a concentration that is typically at least 5 phr (parts per hundred parts rubber by weight).

Plasticizing hydrocarbon resins are polymers that can be aliphatic, aromatic or combinations of these types, meaning that the polymeric base of the resin may be formed from aliphatic and/or aromatic monomers. These resins can be natural or synthetic materials and can be petroleum based, in which case the resins may be called petroleum plasticizing resins, or based on plant materials. In particular embodiments, although not limiting the invention, these resins may contain essentially only hydrogen and carbon atoms.

The plasticizing hydrocarbon resins useful in particular embodiment of the present invention include those that are homopolymers or copolymers of cyclopentadiene (CPD) or dicyclopentadiene (DCPD), homopolymers or copolymers of terpene, homopolymers or copolymers of C₅ cut and mixtures thereof.

Such copolymer plasticizing hydrocarbon resins as discussed generally above may include, for example, resins made up of copolymers of (D)CPD/ vinyl-aromatic, of (D)CPD/ terpene, of (D)CPD/ C₅ cut, of terpene/ vinyl-aromatic, of C₅ cut/ vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (laevorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha- methylstyrene, ortho-, meta-, para-methylstyrene, vinyl-toluene, para-tertiobutylstyrene, methoxystyrenes, chloro-styrenes, vinyl-mesitylene, divinylbenzene, vinylnaphthalene, any vinyl-aromatic monomer coming from the C₉ cut (or, more generally, from a C₈ to C₁₀ cut). Particular embodiments that include a vinyl-aromatic copolymer include the vinyl-aromatic in the minority monomer, expressed in molar fraction, in the copolymer.

Particular embodiments of the present invention include as the plasticizing hydrocarbon resin the (D)CPD homopolymer resins, the (D)CPD/ styrene copolymer resins, the polylimonene resins, the limonene/styrene copolymer resins, the limonene/ D(CPD) copolymer resins, C₅ cut/ styrene copolymer resins, C₅ cut/ C₉ cut copolymer resins, and mixtures thereof.

Commercially available plasticizing resins that include terpene resins suitable for use in the present invention include a polyalphapinene resin marketed under the name Resin R2495 by Hercules Inc. of Wilmington, DE. Resin R2495 has a molecular weight of about 932, a softening point of about 135°C and a glass transition temperature of about 91°C. Another commercially available product that may be used in the present invention includes DERCOLYTE L120 sold by the company DRT of France. DERCOLYTE L120 polyterpene-limonene resin has a number average molecular weight of about 625, a weight average molecular weight of about 1010, an Ip of about 1.6, a softening point of about 119°C and has a glass transition temperature of about 72° C. Still another commercially available terpene resin that may be used in the present invention includes SYLVARES TR 7125 and/or SYLVARES TR 5147 polylimonene resin sold by the Arizona Chemical Company of Jacksonville, FL. SYLVARES 7125 polylimonene resin has a molecular weight of about 1090, has a softening point of about 125° C, and has a glass transition temperature of about 73°C while the SYLVARES TR 5147 has a molecular weight of about 945, a softening point of about 120 °C and has a glass transition temperature of about 71° C.

Other suitable plasticizing hydrocarbon resins that are commercially available include C₅ cut/ vinyl-aromatic styrene copolymer, notably C₅ cut / styrene or C₅ cut / C₉ cut from Neville Chemical Company under the names SUPER NEVTAC 78, SUPER NEVTAC 85 and SUPER NEVTAC 99; from Goodyear Chemicals under the name WINGTACK EXTRA; from Kolon under names HIKOREZ T1095 and HIKOREZ T1100; and from Exxon under names ESCOREZ 2101 and ECR 373,

Yet other suitable plasticizing hydrocarbon resins that are limonene/styrene copolymer resins that are commercially available include DERCOLYTE TS 105 from DRT of France; and from Arizona Chemical Company under the name ZT115LT and ZT5100.

It may be noted that the glass transition temperatures of plasticizing resins may be measured by Differential Scanning Calorimetry (DCS) in accordance with ASTM D3418 (1999). In particular embodiments, useful resins may be have a glass transition temperature that is at least 25° C or alternatively, at least 40° C or at least 60° C or between 25° C and 95° C, between 40° C and 85° C or between 60° C and 80° C.

The amount of plasticizing hydrocarbon resin useful in any particular embodiment of the present invention depends upon the particular circumstances and the desired result. In general, for example, the plasticizing hydrocarbon resin may be present in the rubber composition in an amount of between 5 phr and 120 phr or alternatively, between 5 phr and 100 phr or between 5 phr and 60 phr. In particular embodiments, the plasticizing hydrocarbon resin may be present in an amount of between 5 phr and 70 phr, between 25 phr and 55 phr, between 20 phr and 70 phr, between 20 phr and 65 phr, between 25 phr and 65 phr, between 25 phr and 100 phr, between 55 and 120 phr, between 65 phr and 110 phr or between 15 phr and 70 phr.

The rubber compositions disclosed herein may be cured with any suitable curing system including a peroxide curing system or a sulfur curing system. Particular embodiments are cured with a sulfur curing system that includes free sulfur and may further include, for example, one or more of accelerators, stearic acid and zinc oxide. Suitable free sulfur includes, for example, pulverized sulfur, rubber maker's sulfur, commercial sulfur, and insoluble sulfur. The amount of free sulfur included in the rubber composition is not limited and may range, for example, between 0.5 phr and 10 phr or alternatively between 0.5 phr and 5 phr or between 0.5 phr and 3 phr. Particular embodiments may include no free sulfur added in the curing system but instead include sulfur donors.

Accelerators are used to control the time and/or temperature required for vulcanization and to improve the properties of the cured rubber composition. Particular embodiments of the present invention include one or more accelerators. One example of a suitable primary accelerator useful in the present invention is a sulfenamide. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N'-dicyclohexyl-2-benzothiazolesulfenamide (DCBS). Combinations of accelerators are often useful to improve the properties of the cured rubber composition and the particular embodiments include the addition of secondary accelerators.

Particular embodiments may include as a secondary accelerant the use of a moderately fast accelerator such as, for example, diphenylguanidine (DPG), triphenyl guanidine (TPG), diorthotolyl guanidine (DOTG), o-tolylbigaunide (OTBG) or hexamethylene tetramine (HMTA). Such accelerators may be added in an amount of up to 4 phr, between 0.5 and 3 phr; between 0.5 and 2.5 phr or between 1 and 2 phr. Particular embodiments may exclude the use of fast accelerators and/or ultra-fast accelerators such as, for example, the fast accelerators: disulfides and benzothiazoles; and the ultra-accelerators: thiurams, xanthates, dithiocarbamates and dithiophosphates.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD and TMQ and may be added to rubber compositions in an amount, for example, of from 0.5 phr and 5 phr. Zinc oxide may be added in an amount, for example, of between 1 phr and 6 phr or alternatively, of between 1.5 phr and 4 phr. Waxes may be added in an amount, for example, of between 1 phr and 5 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C, more narrowly between 130° C and 170° C, is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically between 1 and 30 minutes, for example between 2 and 10 minutes) and at a sufficiently low temperature lower than the vulcanization temperature of the mixture, so as to protect against premature vulcanization.

The rubber composition can be formed into useful articles, including treads for use on vehicle tires. The treads may be formed as tread bands and then later made a part of a tire or they be formed directly onto a tire carcass by, for example, extrusion and then cured in a mold. As such, tread bands may be cured before being disposed on a tire carcass or they may be cured after being disposed on the tire carcass. Typically a tire tread is cured in a known manner in a mold that molds the tread elements into the tread, including, *e*.*g*., the sipes molded into the tread blocks.

It is recognized that treads may be formed from only one rubber composition or in two or more layers of differing rubber compositions, *e*.*g.*, a cap and base construction. In a cap and base construction, the cap portion of the tread is made of one rubber composition that is designed for contact with the road. The cap is supported on the base portion of the tread, the base portion made of a different rubber composition. In particular embodiments of the present invention the entire tread may be made from the rubber compositions as disclosed herein while in other embodiments only the cap portions of the tread may be made from such rubber compositions.

It is recognized that the contact surface of a tread block, *i*.*e*., that portion of the tread block that contacts the road, may be formed totally from the rubber composition having the low Tg as disclosed herein, may be formed totally from another rubber composition or may be formed as combinations thereof. For example, a tread block may be formed as a composite of layered rubber compositions such that half of the block laterally is a layer of the low Tg rubber composition and the other half of the block laterally is a layer of an alternative rubber composition. Such construction would provide a tread block having 80 percent of its contact surface formed of the low Tg rubber composition.

As such, in particular embodiments of the present invention, at least 80 percent of the total contact surface of all the tread blocks on a tread may be formed from the rubber composition having the low Tg as disclosed herein. Alternatively, at least 90 percent, at least 95 percent or 100 percent of the total contact surface of all the tread blocks on a tread may be formed from such rubber composition.

While the tire treads disclosed herein are suitable for many types of vehicles, particular embodiments include tire treads for use on vehicles such as passenger cars and/or light trucks. Such tire treads are also useful for all weather tires, snow tires and/or warm weather tires. As such, the properties of the cured rubber compositions from which the treads disclosed herein may be manufactured may have a glass transition temperature of between -35° C and-25° C and/or alternatively, between -28° C and -14° C, between -30° C and -16° C and/or between -16° C and 10° C.

In particular embodiments, such rubber composition may further be characterized as having a shear modulus G* measured at 60° C of between 0.5 MPa and 2 MPa or alternatively, 0.5 MPa and 1.5 MPa, between 0.5 MPa and 1.2 MPa or 0.6 MPa and 1.1 MPa.

The invention is further illustrated by the following examples, which are to be regarded only as illustrations and not delimitative of the invention in any way. The properties of the compositions disclosed in the examples were evaluated as described below and these utilized methods are suitable for measurement of the claimed properties of the present invention.

Modulus of elongation (MPa) was measured at 10% (MA10) at a temperature of 23 °C based on ASTM Standard D412 on dumb bell test pieces. The measurements were taken in the second elongation; *i*.*e*., after an accommodation cycle. These measurements are secant moduli in MPa, based on the original cross section of the test piece.

Wet braking for a tire mounted on an automobile fitted with an ABS braking system was determined by measuring the distance necessary to go from 50 MPH to 0 MPH upon sudden braking on wetted ground (asphalt concrete). A value greater than that of the control, which is arbitrarily set to 100, indicates an improved result, that is to say a shorter braking distance.

Wear resistance of a tire mounted on an automobile was measured by subjecting the tire to actual on-road travel and measuring its wear rate (mm of tread lost per 1000 miles) at between 10,000 and 12,000 miles traveled. A value greater than that of the control, arbitrarily set to 100, indicates an improved result, that is to say less wear rate.

The maximum tan delta dynamic properties for the rubber compositions were measured at 23° G on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single, sinusoidal shearing stress at a frequency of 10 Hz under a controlled temperature of 23° C. Scanning was effected at an amplitude of deformation of 0.05 to 50 % (outward cycle) and then of 50 % to 0.05% (return cycle). The maximum value of the tangent of the loss angle tan delta (max tan δ) was determined during the return cycle.

Dynamic properties (Tg and G*) for the rubber compositions were measured on a Metravib Model VA400 Visco Analyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.7 MPa and at a frequency of 10 Hz over a temperature sweep from -60° C to 100° C with the temperature increasing at a rate of 1.5° C/min. The shear modulus G* at 60° C was captured and the temperature at which the max tan delta occurred was recorded as the glass transition temperature. Tg.

### Example 1

Rubber compositions were prepared using the components shown in Table 1. The amount of each component making up the rubber compositions shown in Table 1 are provided in parts per hundred parts of rubber by weight (phr). The microstructures and glass transition temperatures of each S-SBR is also provided in Table 1.

The terpene resin was SYLVARES TR-5147, a polylimonene resin available from Arizona Chemical, Savannah, GA. The plasticizing oil was naphthenic oil and/or sunflower oil. The silica was ZEOSIL 160, a highly dispersible silica available from Rhodia having a BET of 160 m²/g. The plasticizing oil was AGRI-PURE 80. The silane coupling agent was X 50-S available from Evonik Degussa. The curative package included sulfur, accelerators, zinc oxide and stearic acid.

**Table 1 - Rubber Formulations**

| **Formulations** | **F1 *** | **F2 *** | **F3 *** | **F4** |
|---|---|---|---|---|
| S-SBR | 100 | 100 | 100 | 100 |
| Tg, °C. | - 12 | - 24 | - 48 | - 65 |
| Styrene, wt.% | 44 | 25 | 26 | 15 |
| Vinyl, mol. % | 41 | 58 | 24 | 25 |
| Silica | 107 | 107 | 107 | 107 |
| Plasticizing Oil | 47.5 | 41.5 | 31 | 19 |
| Polyterpene Resin | | 7,5 | 29.5 | 44.9 |
| Silane Coupling Agent | 17.12 | 17.12 | 17.12 | 17.12 |
| Additives (Wax & 6PPD) | 3.4 | 4 | 3.4 | 3.4 |
| Curing Package | 8.1 | 8.4 | 8.1 | 8.1 |
| | | | | |
| **Physical Properties** | | | | |
| MA10 @ 23° C (MPa) | 5.25 | 6.17 | 5.2 | 4.83 |
| Modulus G* @ 60° C | 0,97 | 0.98 | 1.05 | 1.05 |
| Max Tan Delta @ 23° C | 0.36 | 0.35 | 0.37 | 0.34 |
| | -13 | -17 | -19 | -18 |
| | | | | |
| **Tire Tests** | | | | |
| Wet Braking | 131 | 130 | 127 | 125 |
| Wear | 56 | 60 | 82 | 96 |

| | | | | |
|---|---|---|---|---|
| * : **Comparative formulation** | | | | |

The rubber formulations were prepared by mixing the components given in Table 1, except for the sulfur and the accelerators, in a Banbury mixer operating between 25 and 65 RPM until a temperature of between 130° C and 170° C was reached. The accelerators and sulfur were added in the second phase on a mill. Vulcanization was effected at 150° C for 40 minutes. The formulations were then tested to measure their physical properties, the results of which are shown in Table 1.

FIG. 1 is a graph that compares the wet braking and wear performance for tires having treads manufactured from different rubber compositions. Tires (Primacy MXV4 201/55R16) were manufactured using eachof the formulations F1-F4 shown in Table 1. The tires were tested for their wet braking and wear performance in accordance with the test procedures described above. As the glass transition temperature of the SBR was lowered, the results clearly demonstrate the surprising break in the wear/wet braking compromise. Comparing the performance of the tires having treads manufactured of the F1 and F4 formulations, the wear performance increased by 71 % while the wet braking performance decreased by only 5 %.

The terms "comprising," "including," and "halving," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A tread for a tire, the tread comprising a rubber composition that is based upon a cross-linkable elastomer composition, the cross-linkable elastomer composition comprising, per 100 parts by weight of rubber (phr):
greater than 90 phr of an elastomer component selected from a styrene-butadiene rubber, a polybutadiene rubber or combinations thereof having a glass transition temperature of between -100 °C and less than -50° C, as determined by differential scanning calorimetry according to ASTM E1356;
between 0 phr and 9 phr of an additional highly unsaturated diene elastomer;
a plasticizing system comprising between 5 phr and 120 phr of a plasticizing resin having a Tg, as measured by differential scanning calorimetry according to ASTM D3418, of at least 25° C and between 0 phr and 60 phr of a plasticizing liquid;
a reinforcing filler; and
a curing system.

2. The tread of claim 1, wherein the plasticizing system comprises between 10 phr and 55 phr of the plasticizing liquid.

3. The tread of claim 1, wherein the plasticizing system comprises between 55 phr and 120 phr of the plasticizing resin.

4. The tread of claim 1, wherein the cross-linkable rubber composition comprises between 0 phr and 5 phr of the additional highly unsaturated diene elastomer.

5. The tread of claim 1, wherein the cross-linkable rubber composition comprises 0 phr of the additional highly unsaturated diene elastomer

6. The tread of claim 1, wherein the glass transition temperature of the elastomer component is between -100° C and -55° C.

7. The tread of claim 1, wherein the glass transition temperature of the elastomer component is between -90° C and -60° C.

8. The tread of claim 1, wherein a glass transition temperature of the rubber composition is between -30° C and -10° C.

9. The tread of claim 1, wherein the shear modulus G* of the rubber composition is between 0.6 MPa and 1.1 MPa.

10. The tread of claim 1, wherein the elastomer component, the additional highly unsaturated diene rubber or combinations thereof are functionalized with an active moiety.

11. The tread of claim 10, wherein the elastomer component includes chain ends having a silanol functional group attached as the active moiety.

12. The tread of claim 1, wherein the reinforcing filler is silica, the rubber composition comprising between 90 phr and 130 phr of the silica.

13. The tread of claim 1, wherein the plasticizing resin has a glass transition temperature of between 40° C and 85° C.

14. The tread of claim 11, wherein the plasticizing resin is a polylimonene resin.

15. The tread of claim 1, wherein the plasticizing liquid is a selected from sunflower oil, soybean oil, safflower oil, corn oil, linseed oil, cotton seed oil or combinations thereof.

## Patentansprüche

1. Lauffläche für einen Reifen, wobei die Lauffläche eine Kautschukzusammensetzung umfasst, die auf einer vernetzbaren Elastomerzusammensetzung beruht, wobei die vernetzbare Elastomerzusammensetzung, je 100 Gewichtsteile an Kautschuk (phr), Folgendes umfasst:
mehr als 90 phr eines Elastomerbestandteils, ausgewählt aus einem Styren-Butadien-Kautschuk, einem Polybutadien-Kautschuk oder Kombinationen derselben, die eine Glasübergangstemperatur von zwischen -100°C und weniger als -50°C, bestimmt durch dynamische Differenzkalorimetrie nach ASTM E1356, aufweisen,
zwischen 0 phr und 9 phr eines zusätzlichen hochungesättigten Dien-Elastomers,
ein Weichmachersystem, das zwischen 5 phr und 120 phr eines Weichmacherharzes, das eine Tg, gemessen durch dynamische Differenzkalorimetrie nach ASTM D3418, von wenigstens 25°C aufweist, und zwischen 0 phr und 60 phr einer Weichmacherflüssigkeit umfasst,
einen Verstärkerfüllstoff und
ein Vulkanisiersystem.

2. Lauffläche nach Anspruch 1, wobei das Weichmachersystem zwischen 10 phr und 55 phr der Weichmacherflüssigkeit umfasst.

3. Lauffläche nach Anspruch 1, wobei das Weichmachersystem zwischen 55 phr und 120 phr des Weichmacherharzes umfasst.

4. Lauffläche nach Anspruch 1, wobei die vernetzbare Kautschukzusammensetzung zwischen 0 phr und 5 phr des zusätzlichen hochungesättigten Dien-Elastomers umfasst.

5. Lauffläche nach Anspruch 1, wobei die vernetzbare Kautschukzusammensetzung 0 phr des zusätzlichen hochungesättigten Dien-Elastomers umfasst.

6. Lauffläche nach Anspruch 1, wobei die Glasübergangstemperatur des Elastomerbestandteils zwischen -100°C und -55°C beträgt.

7. Lauffläche nach Anspruch 1, wobei die Glasübergangstemperatur des Elastomerbestandteils zwischen -90°C und -60°C beträgt.

8. Lauffläche nach Anspruch 1, wobei die Glasübergangstemperatur der Kautschukzusammensetzung zwischen -30°C und -10°C beträgt.

9. Lauffläche nach Anspruch 1, wobei der Schermodul G* der Kautschukzusammensetzung zwischen 0,6 MPa und 1,1 MPa beträgt.

10. Lauffläche nach Anspruch 1, wobei der Elastomerbestandteil, der zusätzliche hochungesättigte Dien-Kautschuk oder Kombinationen derselben mit einem aktiven Anteil funktionalisiert sind.

11. Lauffläche nach Anspruch 10, wobei der Elastomerbestandteil Kettenenden einschließt, die eine funktionelle Silanolgruppe als den aktiven Anteil angelagert haben.

12. Lauffläche nach Anspruch 1, wobei der Verstärkerfüllstoff Siliziumdioxid ist, wobei die Kautschukzusammensetzung zwischen 90 phr und 130 phr des Siliziumdioxids umfasst.

13. Lauffläche nach Anspruch 1, wobei das Weichmachersystem eine Glasübergangstemperatur von zwischen 40°C und 85°C aufweist.

14. Lauffläche nach Anspruch 11, wobei das Weichmachersystem ein Polylimonen-Harz ist.

15. Lauffläche nach Anspruch 1, wobei das Weichmachersystem eines ist, ausgewählt aus Sonnenblumenöl, Sojabohnenöl, Distelöl, Maisöl, Leinsamenöl, Baumwollsamenöl oder Kombinationen derselben.

## Revendications

1. Bande de roulement pour pneumatique, laquelle bande de roulement comprend une composition de caoutchouc qui est à base d'une composition d'élastomère réticulable, laquelle composition d'élastomère réticulable comprend, pour cent parties en poids de caoutchouc (pcpc) :
plus de 90 pcpc d'un composant élastomère choisi parmi un caoutchouc styrène-butadiène, un caoutchouc polybutadiène et des combinaisons de tels caoutchoucs, présentant une température de transition vitreuse, déterminée par analyse enthalpique différentielle selon la norme ASTM E-1356, située entre -100 °C et moins de -50 °C, entre 0 pcpc et 9 pcpc d'un élastomère de diène supplémentaire, hautement insaturé,
un système plastifiant comprenant entre 5 pcpc et 120 pcpc d'une résine plastifiante qui présente une température de transition vitreuse, déterminée par analyse enthalpique différentielle selon la norme ASTM D-3418, d'au moins 25 °C, ainsi qu'entre 0 pcpc et 60 pcpc d'un liquide plastifiant,
une charge renforçante,
et un système durcisseur.

2. Bande de roulement conforme à la revendication 1, dans laquelle le système plastifiant comprend entre 10 pcpc et 55 pcpc du liquide plastifiant.

3. Bande de roulement conforme à la revendication 1, dans laquelle le système plastifiant comprend entre 55 pcpc et 120 pcpc de la résine plastifiante.

4. Bande de roulement conforme à la revendication 1, dans laquelle la composition de caoutchouc réticulable comprend entre 0 pcpc et 5 pcpc de l'élastomère de diène supplémentaire, hautement insaturé.

5. Bande de roulement conforme à la revendication 1, dans laquelle la composition de caoutchouc réticulable comprend 0 pcpc de l'élastomère de diène supplémentaire, hautement insaturé.

6. Bande de roulement conforme à la revendication 1, dans laquelle la température de transition vitreuse du composant élastomère se situe entre -100 °C et -55 °C.

7. Bande de roulement conforme à la revendication 1, dans laquelle la température de transition vitreuse du composant élastomère se situe entre -90 °C et -60 °C.

8. Bande de roulement conforme à la revendication 1, dans laquelle la température de transition vitreuse de la composition de caoutchouc se situe entre -30 °C et -10 °C.

9. Bande de roulement conforme à la revendication 1, dans laquelle le module de cisaillement G* de la composition de caoutchouc se situe entre 0,6 MPa et 1,1 MPa.

10. Bande de roulement conforme à la revendication 1, dans laquelle le composant élastomère, le caoutchouc de diène supplémentaire hautement insaturé, ou toute combinaison de ceux-ci sont fonctionnalisés au moyen d'une entité active.

11. Bande de roulement conforme à la revendication 10, dans laquelle le composant élastomère comporte des extrémités de chaînes porteuses d'un groupe fonctionnel de type silanol attaché en guise d'entité active.

12. Bande de roulement conforme à la revendication 1, dans laquelle la charge renforçante est de la silice et la composition de caoutchouc comprend entre 90 pcpc et 130 pcpc de silice.

13. Bande de roulement conforme à la revendication 1, dans laquelle la résine plastifiante présente une température de transition vitreuse située entre 40 °C et 85 °C.

14. Bande de roulement conforme à la revendication 11, dans laquelle la résine plastifiante est une résine de type poly(limonène).

15. Bande de roulement conforme à la revendication 1, dans laquelle le liquide plastifiant est choisi parmi de l'huile de tournesol, de l'huile de soja, de l'huile de carthame, de l'huile de maïs, de l'huile de lin, de l'huile de coton, et les combinaisons de ces huiles.
